# EUROPÄISCHE PATENTSCHRIFT

(11) **EP 0 588 806 B1**
(45) Veröffentlichungstag und Bekanntmachung des Hinweises auf die Patenterteilung: **07.08.1996**
(21) Anmeldenummer: 92909441.5
(22) Anmeldetag: 30.04.1992
(51) Int. Cl.: C03B 37/012, C03B 23/047, C03B 37/018

(54) **VERFAHREN ZUR HERSTELLUNG EINER STABFÖRMIGEN VORFORM**
PROCESS FOR MANUFACTURING ROD-LIKE PREFORMS
PROCEDE DE FABRICATION DE PREFORMES ALLONGEES

(30) Priorität: 31.05.1991 DE 4117817
(43) Veröffentlichungstag der Anmeldung: 30.03.1994
(73) Patentinhaber: Heraeus Quarzglas GmbH, D-63450 Hanau (DE)
(72) Erfinder: LEBER, Helmut, D-6450 Hanau (DE); SCHAPER, Hartwig, D-8750 Aschaffenburg (DE); TREBER, Norbert, D-6450 Hanau 9 (DE); VILSMEIER, Gerhart, D-8750 Aschaffenburg (DE); REIMANN, Klaus, D-6458 Rodenbach 1 (DE)
(74) Vertreter: Kühn, Hans-Christian
(86) Internationale Anmeldenummer: EP9200939
(87) Internationale Veröffentlichungsnummer: WO9221627

(56) Entgegenhaltungen:
- EP-A- 0 458 017
- DE-A- 3 206 176
- FR-A- 2 314 151
- FR-A- 2 345 402
- FR-A- 2 436 111

## Beschreibung

Die Erfindung betrifft ein Verfahren zur Herstellung einer stabförmigen Vorform für optische Fasern mit einem Kern und mit mindestens einem, den Kern umhüllenden und eine niedrigere Brechzahl als der Kern aufweisenden Mantel, durch Kollabieren eines rohrförmigen Ausgangs-Körpers in einem Kollabier-Bereich, wobei der Ausgangs-Körper in radialer Richtung gesehen über seine Wandstärke in mindestens einem Grenzflächenbereich eine Brechzahländerung aufweist und wobei während des Kollabierens durch fortgesetztes Evakuieren im rohrförmigen Teil des Ausgangs-Körpers ein gegenüber dem von außen auf den Ausgangs-Körper einwirkenden Außendruck verminderter Innendruck aufrechterhalten, und die Vorform kontinuierlich aus der Erhitzungszone abgezogen wird.

Derartige Verfahren zur Herstellung von Vorformen, insbesondere für optische Fasern, sind allgemein bekannt. Die Herstellung des rohrförmigen Ausgangs-Körpers kann durch Abscheiden von Partikeln auf einem Dorn erfolgen, der beispielsweise aus Glas, Graphit oder Aluminiumoxid besteht. Entsprechend dem gewünschten radialen Brechzahlprofil der Vorform werden den abgeschiedenen Partikeln entweder Dotiermittel beigemischt oder z. B. auch in den durch die Partikelabscheidung entstandenen offenporigen "Soot-Körper" eindiffundiert.

Die Entfernung des Dornes, beispielsweise durch Herausziehen, Herausbohren oder Herausätzen, verursacht Störungen der Innenoberfläche des erzeugten, rohrförmigen Ausgangs-Körpers. Mit dem Ziel der Verminderung von Oberflächendefekten und Materialinhomogenitäten werden die Innenoberflächen der rohrförmigen Ausgangs-Körpern im allgemeinen in unterschiedlichen Reinigungs-Glättungs- und/oder Trocknungsverfahren nachbehandelt.

Zum Zweck des Kollabierens wird der rohrförmige Ausgangs-Körper bei den bekannten Verfahren von einem Ende beginnend, fortlaufend über seine Länge in einer Erhitzungszone erweicht, so daß er zu einem Vollkörper, der Vorform, zusammenfällt.

Aus der EP-A2-0 163 071 ist ein Verfahren zum Herstellen einer Vorform zum Ziehen von Lichtleiffasern bekannt, bei dem ein Quarzglasrohr, das in radialer Richtung gesehen über seine Wandstärke aufgrund unterschiedlicher Germanium-Dotierung einen nicht linearen Brechzahlverlauf aufweist, vertikal einer Erhitzungszone zugeführt und während des Kollabierens in einer Erhitzungszone mit einer Vakuumpumpe verbunden bleibt, wobei der Unterdruck innerhalb des Glasrohres so gewählt werden soll, daß möglichst keine Verarmung an Dotiermaterialien im Zentrum der Vorform auftritt.

In einem aus der EP-A1-0 100 174 bekannten Verfahren zur Herstellung einer optischen Glasfaser, wird die Glasfaser aus einem rohrförmigen Glaskörper, der Schichten mit unterschiedlichen Brechungsindizes aufweist, gezogen, wobei das Glasrohr beidseitig verschlossen und, zur Erleichterung des Kollabiervorganges, das Glasrohr-Innere während des Faserziehens evakuiert ist.

Die bekannten Verfahren haben gemeinsam, daß die gesamte Innenoberfläche des rohrförmigen Ausgangs-Körpers beim Kollabieren auf das Zentrum der Vorform abgebildet wird. Neben Problemen durch Blasenbildung aufgrund von Gaseinschlüssen oder von Dotierstoffverarmung durch Abdampfen von Dotiermaterial während des Kollabiervorganges, führen auch Störungen der Innenoberfläche des rohrförmigen Körpers, etwa aufgrund von Verunreinigungen, Feuchtigkeit oder anderen Oberflächendefekten zu Inhomogenitäten im Zentrum der Vorform. Gerade dort sind sie jedoch im allgemeinen besonders störend. Häufig sind bei den unter Mitwirkung von Unterdruck kollabierten Vorformen auch ovale oder mantelförmige Verformungen der Kernbereiche der Vorform zu beobachten.

Aus der EP-A1-0 458 017 ist zur Herstellung eines homogenen Quarzglasstabes beschrieben, ein Quarzglasrohr unter Rotation einem Ofen zuzuführen, und darin kontinuierlich zu einem homogenen Quarzglasstab zu kollabieren. Dabei wird ein Unterdruck im noch nicht kollabierten, rohrförmigen Teil des Quarzglasrohres derart aufrechterhalten, daß sich aus dem kollabierenden Quarzglas ein Stengel bildet, der entgegen der Abziehrichtung des Quarzglasrohres kontinuierlich abgezogen wird.

Der vorliegenden Erfindung liegt die Aufgabe zugrunde, die Herstellung störungsarmer, stabförmiger Vorformen für optische Elemente zu ermöglichen.

Die Aufgabe wird ausgehend von einem Verfahren der eingangs genannten Art erfindungsgemäß dadurch gelöst, daß der Ausgangs-Körper kontinuierlich unter Rotation und horizontal einer Erhitzungszone zugeführt wird, wobei Außenmaße und Innenmaße des Ausgangs-Körpers, der Abstand des Grenzflächenbereichs von der Innenoberfläche des Ausgangs-Körpers, die Viskosität des Materials des Ausgangs-Körpers im Kollabier-Bereich, die Druckdifferenz zwischen dem Innendruck und dem Außendruck, die Höhe des Innendrucks sowie die Abziehgeschwindigkeit der Vorform und die Zuführgeschwindigkeit des Ausgangs-Körpers so gewählt werden, daß aus dem Kollabier-Bereich, entgegen der Abziehrichtung der Vorform, in der Achse des Ausgangs-Körpers, ein aus Kern-Material bestehender Stengel gebildet wird.

Dadurch, daß die Geometrie des Ausgangs-Körpers und die Verfahrensparameter beim Kollabieren so eingestellt werden, daß aus dem Kollabier-Bereich in der Achse des Ausgangs-Körpers ein Stengel entgegen der Abziehrichtung der kollabierten Vorform gebildet wird, wird ein vorzeitiges Zusammenklappen sich gegenüberliegender Innenwandflächen des Ausgangs-Körpers verhindert. Der sich bildende Stengel stabilisiert somit unmittelbar vor dem Kollabier-Bereich die Symmetrie des erweichenden Ausgangs-Körpers und erleichtert deren Übertragung in die Vorform. Gleichzeitig wird das Material der Innen-Oberflächenschicht des Ausgangs-Körpers umgestülpt und im sich bildenden Stengel aus dem Kollabier-Bereich entfernt. Das Zentrum der kollabierten Vorform, das somit kein Material enthält, das vorher einmal eine Oberfläche gebildet hatte, ist dadurch im wesentlichen frei von Störungen, auch solchen, die aufgrund von Materialabdampfungen in der Erhitzungszone verursacht sein können, herstellbar. Der nicht lineare Brechzahlverlauf über die Wandstärke des Ausgangs-Körpers wird aufgrund von unterschiedlichen Konzentrationen von Dotierstoffen in den Materialschichten des Ausgangs-Körpers hervorgerufen. Unter dem Begriff Grenzflächenbereich wird dabei der Bereich verstanden, von dem aus in radialer Richtung gesehen eine stufenweise oder eine stetige Änderung der Brechzahl auftritt und in dem in der Vorform die Grenzfläche zwischen Kern und Mantel verläuft. Je nach Dotierstoffkonzentrationen weist auch die Viskosität des Materials des Ausgangs-Körpers unterschiedliche Werte auf, so daß im Kollabier-Bereich aufgrund des radial über die Wandstärke des Ausgangs-Körpers gesehen, nicht linearen Viskositätsverlaufes, die Bildung des Stengels erleichtert wird.

Zur Erzielung dieser Vorteile ist es gleichgültig, ob der Ausgangs-Körper einer ortsfesten Erhitzungszone zugeführt oder in kinematischer Umkehr die Erhitzungszone über einen ortsfesten Ausgangs-Körper hinweggeführt wird.

Besonders geeignet ist das erfindungsgemäße Verfahren für das Kollabieren von Hohlzylindern. Dabei hat es sich bewährt, den Hohlzylinder und die Vorform während des Kollabierens mit einer Geschwindigkeit zwischen 5 U/min und 50 U/min um die Längsachse zu rotieren. Durch die Rotation werden zufällige Asymetrien innerhalb der Erhitzungszone ausgeglichen und der sich bildende Stengel im Zentrum des Hohlzylinders stabilisiert. Dabei hat sich eine Ausgangs-Körper-Geometrie als vorteilhaft erwiesen, bei der der Innendurchmesser zwischen 10 mm und 120 mm wobei das Verhältnis von Außen- zu Innendurchmesser im Bereich von 1,5 bis 3 liegt und der Abstand des mindestens einen Grenzflächenbereiches von der Innenoberfläche des Ausgangs-Körpers mindestens 3 Prozent von dessen Wandstärke beträgt. Da der Kollabiervorgang möglichst schnell ablaufen sollte, wird die Temperatur in der Erhitzungszone vorzugsweise so hoch eingestelt, daß im Kollabier-Bereich eine Viskosität des Werkstoffes im Bereich von 10³ dPas bis 10⁷ dPas erzielt wird. Für den Innendruck im rohrförmigen Teil des Ausgangs-Körpers, der mitbestimmend für die Geschwindigkeit, mit der der Stengel gebildet wird und für die für den Aufbau des Stengels aufgebrachte Werkstoffmasse ist, haben sich Werte bis maximal 1008 mbar als geeignet erwiesen, wobei die Druckdifferenz zwischen dem Innendruck und dem auf den Ausgangs-Körper wirkenden Außendruck mit Werten zwischen 5 mbar und 813 mbar zweckmäßig so gewählt wird, daß der Ausgangs-Körper im Bereich der Erhitzungszone nicht unkontrolliert verformt wird. Um trotz einer genügenden Durchheizung des Werkstoffes und einer ausreichenden thermischen Stabilität im Kollabier-Bereich, dennoch einen wirtschaftlichen Massendurchsatz zu erreichen, hat sich eine Abziehgeschwindigkeit der Vorform aus dem Kollabier-Bereich zwischen 10 mm/min und 80 mm/min und eine Zuführgeschwindigkeit des Ausgangs-Körpers zur Erhitzungszone zwischen 8 mm/min und 35 mm/min bewährt.

Es hat sich als vorteilhaft erwiesen, die Vorform und den Ausgangs-Körper mit derselben Geschwindigkeit und in gleicher Umdrehungsrichtung zu rotieren. Vermischungen von Schichten des Ausgangs-Körpers und der Vorform mit unterschiedlichen Brechzahlen werden dadurch vermieden.

Besonders bewährt hat sich das erfindungsgemäße Verfahren für das Kollabieren von Ausgangs-Körpern, bei denen sich die Viskosität bei gegebener Temperatur von innen nach außen verringert. So lassen sich beispielsweise durch geeignete Dotierstoffkonzentrationen der innersten Schicht des Ausgangs-Körpers hohe Viskositätsunterschiede zwischen dieser Schicht und einer benachbarten, aber weiter außen liegenden Schicht einstellen, so daß die innere Schicht im Kollabierbereich leicht von der benachbarten Schicht abgeschält und als sich bildender Stengel umgestülpt werden kann.

Besonders einfach gestaltet sich das Verfahren bei der Verwendung von Ausgangs-Körpern, die einen Stufenindex-Verlauf der Brechzahl über ihre Wandstärke aufweisen. Die Gefahr einer Vermischung von Bereichen unterschiedlicher Brechzahlen durch eine eventuelle unsymmetrische Bildung des Stengels wird dadurch weitgehend vermindert. Das Verfahren hat sich zum Kollabieren von Ausgangs-Körpern, die überwiegend aus SiO₂ bestehen, insbesondere solchen, die in radialer Richtung gesehen mindestens eine Schicht aus Germanium-dotiertem SiO₂ aufweisen, sowie solchen, die in radialer Richtung gesehen mindestens eine Schicht aus undotiertem SiO₂ und dazu benachbart und weiter außen liegend mindestens eine Mantelglas-Schicht aus Fluor-dotiertem SiO₂ aufweisen, als vorteilhaft erwiesen.

Das erfindungsgemäße Verfahren wird anhand einer schematischen Darstellung nachfolgend beispielhaft beschrieben.

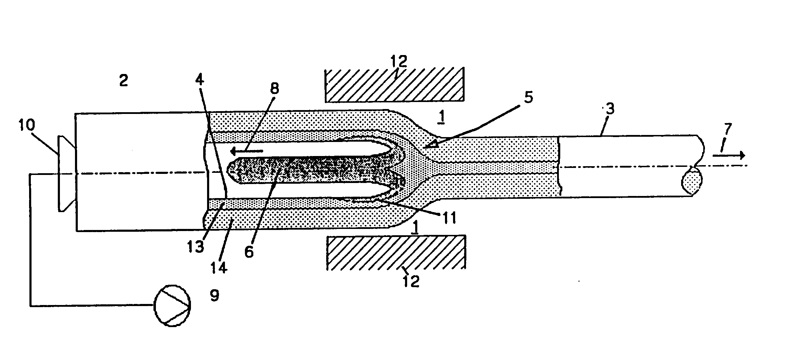

Mit der Bezugsziffer 12 ist eine elektrische Widerstandsheizung bezeichnet, die die Erhitzungszone 1 umhüllt, die einen Abschnitt eines zu kollabierenden Quarzglasrohres 2 und einer bereits kollabierten Vorform 3 umschließt. Innerhalb der Erhitzungszone 1 fallen die Innenwandungen 4 des Quarzglasrohres 2 in einem Kollabier-Bereich 5 zusammen, wobei ein Stengel 6 gebildet und entgegen der Abziehrichtung der Vorform 3 aus dem Kollabier-Bereich 5 abgezogen wird. Die Abziehrichtung der Vorform 3 ist mit dem Richtungspfeil 7, die des Stengels mit dem Richtungspfeil 8 gekennzeichnet. Das Quarzglasrohr 2 ist an seiner, dem Kollabier-Bereich 5 abgewandten Stirnseite mit einem Stopfen 10 verschlossen. Innerhalb des Quarzglasrohres 2 wird während des Kollabierens ein Innendruck von 900 mbar mittels einer Vakuumpumpe 9 gehalten, die über eine vakuumdichte Durchführung durch den Stopfen 10 an das Quarzglasrohr 2 angeschlossen ist. Das Quarzglasrohr 2, das einen Außendurchmesser von 120 mm und einen Innendurchmesser von 60 mm hat, weist als innerste Schicht mit einer Schichtdicke von etwa 6 mm eine Kernglas-Schicht 13 aus reinem, synthetischem Quarzglas und dazu benachbart und weiter außen liegend eine Mantelglas-Schicht 14 aus mit 0,5 Gew.-% Fluor dotiertem, synthetischem Quarzglas auf (der Deutlichkeit wegen sind die Schichtdicken in der Figur nicht maßstabsgerecht dargestellt). Das Quarzglasrohr 2 wird horizontal orientiert und unter kontinuierlicher Rotation von 20 U/min mit einer Zuführgeschwindigkeit von 23 mm/min der Erhitzungszone 1 zugeführt und dort auf eine Temperatur um 2100°C aufgeheizt. Im Kollabier-Bereich 5 hat das Quarzglas dabei eine mittlere Viskosität von 10⁵ dPas. Während des Kollabierens hält die Vakuumpumpe 9 im Quarzglasrohr 2 einen Innendruck von 900 mbar aufrecht, so daß gegenüber dem außen an der Quarzglasrohr-Oberfläche anliegenden Atmosphärendruck eine Druckdifferenz von 113 mbar erhalten bleibt. Die Abziehgeschwindigkeit der Vorform 3 beträgt 23,5 mm/min und ist damit geringfügig höher als die Zuführgeschwindigkeit des Quarzglasrohres 2. Dadurch werden das Quarzglasrohr 2 und die Quarzglas-Vorform 3 ständig auf Zug gehalten.

Aufgrund der oben angeführten Versuchsparameter bildet sich in der Achse des Quarzglasrohres 2 ein Stengel 6 aus, der sich aus Material aus den oberflächennahen Bereichen 11 (in der Figur mit dunklerer Schraffur angedeutet) der Innenwandungen 4 des Quarzglasrohres 2 zusammensetzt, die im Kollabier-Bereich 5 eine so niedrige Viskosität haben, daß sie von den in Längsachsenrichtung, entgegen der Abziehrichtung 7 der Vorform 3 wirkenden Druck- bzw. Vakuumkräften verformt und in Richtung des Stengelwachstums 8 umgestülpt werden. Mit dem Stengel 6 werden somit die Verschmutzungen und Störungen der oberflächennahen Bereiche 11 aus dem Kollabier-Bereich 5 entfernt. Außerdem wird durch die Ausbildung des Stengels 6 ein Zusammenfallen gegenüberliegender Innenwandungen 4 des Quarzglasrohres 2 verhindert und damit die Symmetrie des Quarzglasrohres 2 unmittelbar vor dem Kollabier-Bereich 5 stabilisiert und in der Vorform 3 übertragen. Der Durchmesser des so hergestellten Vorform 3 beträgt ca. 96 mm. davon entfallen auf den Kernglas-Bereich ca. 8 mm. Der Stengel 6 weist einen Durchmesser von etwa 40 mm auf.

## Patentansprüche

1. Verfahren zur Herstellung einer stabförmigen Vorform für optische Fasern mit einem Kern und mit mindestens einem, den Kern umhüllenden und eine niedrigere Brechzahl als der Kern aufweisenden Mantel, durch Kollabieren eines rohrförmigen Ausgangs-Körpers (2) in einem Kollabier-Bereich (5), wobei der Ausgangs-Körper (2) in radialer Richtung gesehen über seine Wandstärke in mindestens einem Grenzflächenbereich eine Brechzahländerung aufweist und wobei während des Kollabierens durch fortgesetztes Evakuieren im rohrförmigen Teil des Ausgangs-Körpers (2) ein gegenüber dem von außen auf den Ausgangs-Körper (2) einwirkenden Außendruck verminderter Innendruck aufrechterhalten, und die Vorform (3) kontinuierlich aus der Erhitzungszone (12) abgezogen wird, dadurch gekennzeichnet, daß der Ausgangs-Körper (2) kontinuierlich unter Rotation und horizontal einer Erhitzungszone (12) zugeführt wird, wobei Außenmaße und Innenmaße des Ausgangs-Körpers, der Abstand des Grenzflächenbereichs von der Innenoberfläche (4) des Ausgangs-Körpers (2), die Viskosität des Materials des Ausgangs-Körpers (2) im Kollabier-Bereich (5), die Druckdifferenz zwischen dem Innendruck und dem Außendruck, die Höhe des Innendrucks sowie die Abziehgeschwindigkeit der Vorform (3) und die Zuführgeschwindigkeit des Ausgangs-Körpers (2) so gewählt werden, daß aus dem Kollabier-Bereich (5), entgegen der Abziehrichtung (7) der Vorform (3), in der Achse des Ausgangs-Körpers (2), ein aus Kern-Material bestehender Stengel (6) gebildet wird.

2. Verfahren nach Anspruch 1, dadurch gekennzeichnet, daß der Ausgangs-Körper (2) und die Vorform (3) mit einer Geschwindigkeit im Bereich von 5 U/min bis 50 U/min um die Längsachse rotiert werden, daß zylindrische Ausgangs-Körper (2) mit einem Innendurchmesser im Bereich von 10 mm bis 120 mm, wobei das Verhältnis von Außen- zu Innendurchmesser im Bereich von 1,5 bis 3 liegt und der Abstand des mindestens einen Grenzflächenbereiches von der Innenoberfläche des Ausgangs-Körpers (2) mindestens 3 Prozent der Wandstärke des Ausgangs-Körpers (2) beträgt, umgeformt werden, daß die Viskosität des Materials des Ausgangs-Körpers (2) im Kollabier-Bereich (5) auf einen Wert im Bereich von 10³dPas bis 10⁷dPas eingestellt wird, daß der Innendruck im rohrförmigen Teil des Ausgangs-Körpers (2) auf einem Wert von maximal 1008 mbar gehalten und die Druckdifferenz auf einem Wert im Bereich von 5 mbar bis 813 mbar eingestellt wird, daß die Abziehgeschwindigkeit der Vorform (3) auf einem Wert im Bereich zwischen 10 mm/min und 80 mm/min und die Zuführgeschwindigkeit des Ausgangs-Körpers (2) auf einem Wert im Bereich zwischen 8 mm/min und 35 mm/min eingestellt werden.

3. Verfahren nach Anspruch 1 oder Anspruch 2, dadurch gekennzeichnet, daß der Ausgangs-Körper (2) und Vorform (3) mit der selben Geschwindigkeit und in gleicher Umdrehungsrichtung rotiert werden.

4. Verfahren nach einem oder mehreren der Ansprüche 1 bis 3, dadurch gekennzeichnet, daß Ausgangs-Körper (2) verwendet werden, bei denen sich die Viskosität bei gegebener Temperatur von innen nach außen verringert.

5. Verfahren nach einem der Ansprüche 1 bis 4, dadurch gekennzeichnet, daß Ausgangs-Körper (2) verwendet werden, die im wesentlichen aus SiO₂ bestehen.

6. Verfahren nach einem der Ansprüche 1 bis 5, dadurch gekennzeichnet, daß Ausgangs-Körper (2) verwendet werden, die mindestens eine Schicht aus Germanium-dotiertem SiO₂ aufweisen.

7. Verfahren nach einem oder mehreren der Ansprüche 1 bis 6, dadurch gekennzeichnet, daß Ausgangs-Körper verwendet werden, die in radialer Richtung gesehen mindestens eine Schicht (14) aus undotiertem SiO₂ oder aus Germanium-dotiertem SiO₂ (14) und mindestens eine weiter außen liegende Mantelglas-Schicht (15) aus Fluor-dotiertem SiO₂ aufweisen.

## Claims

1. Process for manufacturing a rod-like preform for optical fibres, having a core and having at least one shell which surrounds the core and has a lower refractive index than the core, by collapsing a tubular starting body (2) in a collapsing zone (5), the starting body (2) exhibiting a change in refractive index in the radial direction over its wall thickness in at least one interfacial zone, and an internal pressure which is lower than the external pressure acting from the outside on the starting body (2) being maintained during the collapsing procedure by continuous evacuation in the tubular part of the starting body (2), and the preform (3) is drawn off continuously from the heating zone (12), characterized in that the starting body (2) is fed continuously, horizontally and with rotation, to a heating zone (12), external dimensions and internal dimensions of the starting body, the distance between the interfacial zone and the inner surface (4) of the starting body (2), the viscosity of the material of the starting body (2) in the collapsing zone (5), the difference between the internal pressure and the external pressure, the magnitude of the internal pressure and the draw-off speed of the preform (3) and the feed speed of the starting body (2) being chosen so that a stem (6) consisting of core material is formed from the collapsing zone (5), in a direction opposite to the draw-off direction (7) of the preform (3), in the axis of the starting body (2).

2. Process according to Claim 1, characterized in that the starting body (2) and the preform (3) are rotated at a speed in the range from 5 rpm to 50 rpm around the longitudinal axis, that cylindrical starting bodies (2) are formed having an internal diameter in the range from 10 mm to 120 mm, the ratio of external to internal diameter being in the range from 1.5 to 3 and the distance between the one or more interfacial zones and the inner surface of the starting body (2) being at least 3 percent of the wall thickness of the starting body (2), that the viscosity of the material of the starting body (2) in the collapsing zone (5) is adjusted to a value in the range from 10³ dPas to 10⁷ dPas, that the internal pressure in the tubular part of the starting body (2) is kept at a value of not more than 1008 mbar and the pressure difference is adjusted to a value in the range from 5 mbar to 813 mbar, and that the draw-off speed of the preform (3) is adjusted to a value in the range between 10 mm/min and 80 mm/min and the feed speed of the starting body (2) is adjusted to a value in the range between 8 mm/min and 35 mm/min.

3. Process according to Claim 1 or Claim 2, characterized in that the starting body (2) and preform (3) are rotated at the same speed and in the same direction of rotation.

4. Process according to one or more of Claims 1 to 3, characterized in that starting bodies (2) are used in which the viscosity at a given temperature decreases from the inside to the outside.

5. Process according to any of Claims 1 to 4, characterized in that starting bodies (2) which essentially comprise SiO₂ are used.

6. Process according to any of Claims 1 to 5, characterized in that starting bodies (2) which have at least one layer of germanium-doped SiO₂ are used.

7. Process according to one or more of Claims 1 to 6, characterized in that starting bodies which, viewed in the radial direction, have at least one layer (14) of undoped SiO₂ or of germanium-doped SiO₂ (14) and at least one jacket glass layer (15) located further outside and comprising fluorine-doped SiO₂ are used.

## Revendications

1. Procédé de fabrication d'une préforme en forme de baguette pour fibres optiques, comportant un coeur et au moins une gaine enveloppant le coeur et présentant un indice de réfraction inférieur à celui du coeur, par affaissement d'un corps initial tubulaire (2) dans une zone d'affaissement (5), étant entendu que le corps initial (2) présente un gradient d'indice de réfraction dans le sens radial, dans son épaisseur de paroi, dans au moins une zone interfaciale et étant entendu qu'une pression interne inférieure à la pression externe s'exerçant extérieurement sur le corps initial (2) est maintenue pendant l'affaissement par application continue d'un vide dans la partie tubulaire du corps initial (2) et que la préforme (3) est étirée continûment à partir de la zone de chauffage (12), caractérisé en ce que le corps initial (2) est acheminé continûment en rotation et à l'horizontale à une zone de chauffage (12), les dimensions externes et les dimensions internes du corps initial, la distance entre la zone interfaciale et la surface interne (4) du corps initial (2), la viscosité du matériau du corps initial (2) dans la zone d'affaissement (5), la différence entre la pression interne et la pression externe, le chiffre de la pression interne ainsi que la vitesse d'étirage de la préforme (3) et la vitesse d'acheminement du corps initial (2) étant choisis de façon qu'une tige (6) en matériau du coeur soit formée à partir de la zone d'étirage (5), dans le sens contraire à celui de l'étirage (7) de la préforme (3), dans l'axe du corps initial (2).

2. Procédé selon la revendication 1, caractérisé en ce que le corps initial (2) et la préforme (3) sont entraînés en rotation autour de l'axe longitudinal à une vitesse de l'ordre de 5 tr/min à 50 tr/min, que sont déformés des corps initiaux cylindriques (2) ayant un diamètre interne de l'ordre de 10 mm à 120 mm, le rapport du diamètre externe au diamètre interne étant de l'ordre de 1,5 à 3, et la distance entre au moins une zone interfaciale et la surface interne du corps initial (2) représentant au moins 3% de l'épaisseur de paroi du corps initial (2), que la viscosité du matériau du corps initial (2) dans la zone d'affaissement (5) est ajustée à un chiffre compris entre 10³ dPas et 10⁷ dPas, que la pression interne dans la partie tubulaire du corps initial (2) est maintenue à une valeur maximale de 1008 mbar et que la différence de pression est ajustée à une valeur comprise entre 5 mbar et 813 mbar, que la vitesse d'étirage de la préforme (3) est ajustée à une valeur comprise entre 10 mm/min et 80 mm/min et la vitesse d'acheminement du corps initial (2) à une valeur comprise entre 8 mm/min et 35 mm/min.

3. Procédé selon la revendication 1 ou 2, caractérisé en ce que le corps initial (2) et la préforme (3) sont entraînés en rotation à la même vitesse et dans le même sens de rotation.

4. Procédé selon une ou plusieurs des revendications 1 à 3, caractérisé en ce qu'on utilise des corps initiaux (2) dont la viscosité diminue de l'intérieur vers l'extérieur à une température donnée.

5. Procédé selon une des revendications 1 à 4, caractérisé en ce qu'on utilise des corps initiaux (2) composés essentiellement de SiO₂.

6. Procédé selon une des revendications 1 à 5, caractérisé en ce qu'on utilise des corps initiaux (2) présentant au moins une couche en SiO₂ dopé de germanium.

7. Procédé selon une ou plusieurs des revendications 1 à 6, caractérisé en ce qu'on utilise des corps initiaux présentant dans le sens radial au moins une couche (14) en SiO₂ non dopé ou en SiO₂ dopé de germanium et au moins une couche en verre formant gaine (15), plus proche de l'extérieur, en SiO₂ dopé de fluor.
